Europäisches Patentamt

European Patent Office

Office européen des brevets

(11) Veröffentlichungsnummer: **0 049 317**
**B1**

(12) **EUROPÄISCHE PATENTSCHRIFT**

(19)

(51) Int. Cl.³: **F 24 J 3/02**

(45) Veröffentlichungstag der Patentschrift:
03.10.84

(21) Anmeldenummer: 81102924.8

(22) Anmeldetag: 16.04.81

(54) Wärmetauscher zum Gewinnen von Wärme aus Umluft.

(30) Priorität: 07.10.80 DE 3037849

(43) Veröffentlichungstag der Anmeldung:
14.04.82 Patentblatt 82/15

(45) Bekanntmachung des Hinweises auf die Patenterteilung:
03.10.84 Patentblatt 84/40

(84) Benannte Vertragsstaaten:
AT BE CH DE FR GB IT LI LU NL SE

(56) Entgegenhaltungen:
DE - A - 2 851 380
DE - U - 7 527 337
DE - U - 7 922 721

(73) Patentinhaber: Wilhelm Reisgies KG, Schlebuscher
Strasse 71, D-5090 Leverkusen 3 (DE)

(72) Erfinder: Wegner, Günther, Bayerstrasse 37,
D-5303 Bornheim-Hersel (DE)

(74) Vertreter: Gille, Christian, Dipl.-Ing. et al, Redies ,
Redies, Türk & Gille Bruckner Strasse 20,
D-4000 Düsseldorf 13 (DE)

## Beschreibung

Die Erfindung betrifft einen zum Gewinnen von Wärme aus Umluft bestimmten, frei aufstellbaren Wärmetauscher, der an einem Ständer übereinander in gegenseitigem Abstand voneinander mehrere mit einer Zulaufleitung und einer Ablaufleitung verbundene plattenförmige Wärmetauschelemente für den Durchstrom eines Wärmeträgermediums aufweist, deren Oberflächen einem Luftstrom ausgesetzt sind.

Zum Gewinnen von Nutzwärme aus Sonnenenergie ist es bekannt, auf Gebäuden sogenannte Sonnenkollektoren anzubringen, die im allgemeinen aus auf dem Dach zu befestigenden grossflächigen plattenförmigen Elementen bestehen, die auch aus biegsamen Folien hergestellt sein können (DE-U-75 27 337). Weiterhin ist es zum Gewinnen von Nutzwärme aus Aussenluft bekannt, einen sogenannten «Energie-Stapel» als Wärmetauscher zu verwenden, d.h. einen Wärmetauscher für eine Wärmepumpenheizung, der aus einer Mehrzahl von an Ständern übereinander angeordneten, an eine gemeinsame Zulaufleitung und eine gemeinsame Ablaufleitung angeschlossenen plattenförmigen Wärmetauschelementen besteht, die von einem Wärmeträgermedium wie Wasser durchströmt sind und zwischen denen der Wind hindurchstreichen soll (DE-A1–28 51 380).

Ein derartiger Wärmetauscher ist verhältnismässig sperrig und hat ein unschönes Aussehen. Der Durchstrom von windbewegter Aussenluft zwischen den einzelnen plattenförmigen Wärmetauschelementen ist nur unvollkommen gewährleistet, weil diese Elemente verhältnismässig dicht aneinander liegen und keine Vorkehrungen getroffen sind, um den Luftstrom in einer den zweckmässigsten Wärmeübergang gewährleistenden Weise zu leiten.

Schliesslich ist zum Gewinnen von Nutzwärme aus Aussenluft ein Absorber für eine Wärmepumpe bekannt (DE-U 1–79 22 721), der an einer zentralen Säule im Abstand übereinander scheibenförmige Wärmetauschelemente aufweist, die jeweils aus einem spiralförmig gewickelten Schlauch bestehen und an eine gemeinsame Zulaufleitung und eine gemeinsame Ablaufleitung für zu erwärmendes Wasser angeschlossen sind. Auch bei diesem Absorber ist der Durchstrom von windbewegter Aussenluft zwischen den scheibenförmigen Wärmetauschelementen nur unvollkommen, weil keine Vorkehrungen getroffen sind, um den Luftstrom in einer den zweckmässigsten Wärmeübergang gewährleistenden Weise zwischen den Wärmetauschelementen hindurchzuleiten.

Alle bekannten Wärmetauscher zum Gewinnen von Wärme aus Umluft haben ausserdem den Nachteil, dass sie ein unschönes Aussehen haben, so dass sie nicht überall aufgestellt werden können.

Der Erfindung liegt die Aufgabe zugrunde, einen Wärmetauscher zum Gewinnen von Wärme aus Umluft zu schaffen, der ein ansprechendes Äusseres aufweist und mit verbessertem Wirkungsgrad arbeitet.

Diese Aufgabe wird erfindungsgemäss bei einem Wärmetauscher der eingangs genannten Gattung dadurch gelöst, dass die Wärmetauschelemente pyramidenförmig oder kreisscheibenförmig kegelig ausgebildet sind und im Zentrum jeweils eine Öffnung für den Durchstrom von zentral hochsteigender Luft und für den Ständer enthalten.

Die einzelnen Wärmetauschelemente haben eine verhältnismässig geringe Höhe, so dass der Wärmetauscher trotz der pyramidenförmigen oder kegeligen Ausbildung der einzelnen Wärmetauschelemente nicht unnötig hoch wird. Die einzelnen Wärmetauschelemente werden von aussen zum Zentrum von der die Wärme abgebenden Luft überstrichen, so dass sich innerhalb des Wärmetauschers kein Luftstau bilden und die bereits abgekühlte Luft dem Wärmetauscher nicht wieder Wärme entziehen kann. Der Wärmetauscher kann unabhängig von dem mit seiner Hilfe zu beheizenden Gebäude aufgestellt werden, beispielsweise in einem Garten, auf einem Vorplatz oder an sonst geeigneter Stelle, um einerseits die gewünschte Luftströmung über seine Wärmetauschelemente zu gewährleisten und andererseits ihn dort zu installieren, wo aus ästhetischen oder sonstigen Gründen keine Beschränkungen für die Aufstellung gegeben sind.

Bei dem erfindungsgemässen Wärmetauscher sind mehrere flach pyramidenförmig oder flach kegelig ausgebildete Wärmetauschelemente an einem oder mehreren Ständern angeordnet und bilden sozusagen einen Baum, durch den Luft hindurchbewegt wird, welche, nachdem sie ein Wärmetauschelement überstrichen hat und ihr dabei die entnehmbare Wärme entzogen worden ist, am zentralen Ständer hochsteigt, ohne erneut über ein weiteres Wärmetauschelement strömen zu müssen, so dass die abgekühlte Luft den anderen Wärmetauschelementen des Wärmetauschers nicht wieder Wärme entziehen kann. Andererseits kann die Luft, welche die Wärmetauschelemente von einer Seite anströmt, nach Abgabe der Wärme den Wärmetauschelementen an der entgegengesetzten Seite nicht wieder Wärme entziehen, weil sie im Zentrum des Wärmetauschers abströmt.

Die scheibenförmig und im Querschnitt konisch, d.h. also pyramidenförmig oder kegelig ausgebildeten einzelnen Wärmetauschelemente enthalten im Zentrum eine Öffnung, durch die nicht nur der Ständer hindurchgeführt ist, sondern die so gross gewählt wird, dass die Luft ungehindert am Ständer entlang strömen kann.

Gemäss einem weiteren Merkmal der Erfindung kann jedes Wärmetauschelement des Wärmetauschers auf einem Tragkörper derart im Abstand von diesem abgestützt sein, dass sich zwischen dem Tragkörper und dem Wärmetauschelement ein von aussen zum Zentrum führender Kanal für den Durchstrom der Luft befindet. Der Tragkörper stützt dabei nicht nur das betreffende Wärmetauschelement ab, sondern schützt dessen Unterseite auch gegen die von dem darunter befindlichen Wärmetauschelement kommende, bereits abgekühlte Luft, so dass über die Oberseite und die Unterseite der einzelnen Wärmetauschelemente stets nur frische Luft strömen kann, der sich noch Wärme entziehen lässt.

Jedes Wärmetauschelement besteht vorzugsweise aus einem konturierten, plattenförmigen Körper, der eine strömungsmitteldichte Aussenhaut aufweist und im Inneren Öffnungen für den Durchstrom und die Verteilung eines Wärmeträgermediums wie einer Flüssigkeit enthält und mit einem Einlass und einem Auslass für das Wärmeträgermedium versehen ist. Die Wärmetauschelemente sind daher als dünne Körper ausgebildet, die optimal für den Wärmeübergang geeignet sind, weil das Wärmeträgermedium in verhältnismässig dünner Schicht durch die einzelnen Wärmetauschelemente strömt und dementsprechend eine verhältnismässig grosse Oberfläche für den Wärmeübergang bietet.

In der Zeichnung sind Ausführungsbeispiele des erfindungsgemässen Wärmetauschers schematisch dargestellt, und zwar zeigt

Fig. 1 die Ansicht einer Ausführungsform des Wärmetauschers mit auf einer zentralen Säule im Abstand übereinander angeordneten pyramidenförmigen einzelnen Wärmetauschelementen,

Fig. 2 eine Draufsicht auf den Wärmetauscher aus Fig. 1,

Fig. 3 eine Ansicht einer abgewandelten Ausführungsform des Wärmetauschers mit auf einer zentralen Säule im Abstand übereinander angeordneten kreisscheibenförmigen Wärmetauschelementen, deren Durchmesser von unten nach oben abnimmt,

Fig. 4 eine Draufsicht auf den Wärmetauscher aus Fig. 3 und

Fig. 5 einen im Massstab vergrösserten Teilschnitt durch einen Wärmetauscher der Ausführungsformen gemäss Fig. 1 und 3.

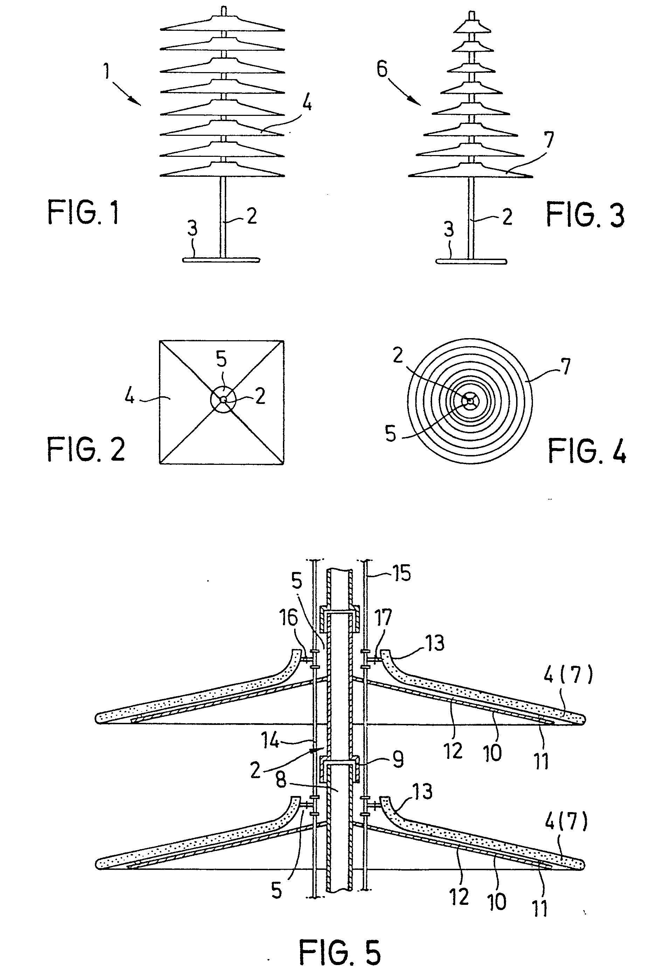

Der in Fig. 1 und 2 dargestellte Wärmetauscher 1 besteht aus einer Säule 2 mit Fuss 3 und auf der Säule 2 im Abstand übereinander angerodneten Wärmetauschelementen 4, die, wie insbesondere Fig. 2 zeigt, pyramidenförmig ausgebildet sind und eine zentrale Öffnung 5 enthalten, deren Durchmesser deutlich grösser als der der Säule 2 ist. Fig. 1 zeigt, dass die Wärmetauschelemente 4 eine verhältnismässig geringe Höhe aufweisen.

Der Wärmetauscher 6 aus Fig. 3 und 4 unterscheidet sich vom Wärmetauscher 1 dadurch, dass an der Säule 2 in Draufsicht kreisscheibenförmige flachkegelige Wärmetauschelemente 7 angeordnet sind, wobei der Durchmesser der einzelnen Wärmetauschelemente von unten nach oben stufenweise abnimmt.

Aus Fig. 5 sind Einzelheiten der Wärmetauscher 1 und 6 zu erkennen. Die Säule 2 ist aus einzelnen Rohrstücken 8 gebildet, die am unteren Ende jeweils eine Muffe 9 aufweisen, um sie auf ein darunter befindliches Rohrstück 8 aufstecken zu können. An jedem Rohrstück 8 ist ein pyramidenförmiger oder kegeliger Tragkörper 10 befestigt, auf dem ein Wärmetauschelement 4 bzw. 7 mittels Stützen 11 derart abgestützt ist, dass sich zwischen der Oberseite des Tragkörpers 10 und der Unterseite des Wärmetauschelementes ein Kanal 12 für den Durchstrom von Aussenluft befindet.

Das Wärmetauschelement 4 weist im Zentrum einen hochstehenden Ansatz 13 auf, der die Öffnung 5 umschliesst. Durch die Öffnung 5 jedes einzelnen Wärmetauschelementes 4 bzw. 7 erstrecken sich zwei Rohrleitungen 14 und 15 zur Zu- und Abfuhr des Wärmeträgermediums, welche jeweils über Stichleitungen 16 bzw. 17 mit den einzelnen Wärmetauschelementen 4 bzw. 7 derart verbunden sind, dass durch die eine Rohrleitung herangeführtes Wärmeträgermedium in die einzelnen Wärmetauschelemente einströmt und durch die andere zu einem Verbraucher zurückfliesst. Die Wärmetauschelemente 4 und 7 sind dabei als flache Körper mit strömungsmitteldichter Aussenhaut und einer Vielzahl von Öffnungen im Inneren versehen, so dass das in dieselben eingeleitete Wärmeträgermedium in diesen gleichmässig verteilt wird und dieselben gleichförmig durchströmt.

## Patentansprüche

1. Wärmetauscher zum Gewinnen von Wärme aus Umluft, welcher frei aufstellbar ausgebildet ist, mit mehreren an einem Ständer (2) übereinander in gegenseitigem Abstand voneinander angeordneten mit einer Zulaufleitung und einer Ablaufleitung verbundenen plattenförmigen Wärmetauschelementen (4; 7) für den Durchstrom eines Wärmeträgermediums, deren Oberflächen einem Luftstrom ausgesetzt sind, dadurch gekennzeichnet, dass die Wärmetauschelemente (4; 7) pyramidenförmig oder kreisscheibenförmig kegelig ausgebildet sind und im Zentrum jeweils eine Öffnung (5) für den Durchstrom von zentral hochsteigender Luft und für den Ständer (2) enthalten.

2. Wärmetauscher nach Anspruch 1, dadurch gekennzeichnet, dass der Durchmesser der einzelnen kreisscheibenförmigen Wärmetauschelemente (7) von unten nach oben abnimmt.

3. Wärmetauscher nach Anspruch 1 oder 2, dadurch gekennzeichnet, dass jedes Wärmetauschelement (4; 7) auf einem Tragkörper (10) derart im Abstand von demselben abgestützt ist, dass sich zwischen diesem und dem Wärmetauschelement ein von aussen zum Zentrum führender Kanal (12) für den Durchstrom von Luft befindet.

4. Wärmetauscher nach einem der Ansprüche 1 bis 3, dadurch gekennzeichnet, dass jedes Wärmetauschelement (4; 7) aus einem konturierten, plattenförmigen Körper besteht, der eine strömungsmitteldichte Aussenhaut aufweist und im Inneren Öffnungen für den Durchstrom und die Verteilung des Wärmeträgermediums, z.B. einer Flüssigkeit, enthält und mit wenigstens einem Einlass (16) und wenigstens einem Auslass (17) für das Wärmeträgermedium versehen ist.

## Revendications

1. Echangeur thermique pour obtenir de la chaleur de l'air ambiant qui est conçu librement montable et qui comprend une pluralité d'éléments d'échange thermique en forme de plaques (4; 7) et comportant une tuyauterie d'arrivée et une tuyauterie de vidange, les plaques étant disposées de façon superposée à distance l'une par rapport à l'autre sur un support (2) pour permettre la circulation d'un flux de support thermique et dont les surfaces sont exposées à un flux d'air, caractérisé en ce que les éléments d'échange thermique (4; 7) sont conçus de façon conique en forme de pyramide ou en forme de disque circulaire et comprennent à leur centre une ouverture (5) pour la circulation d'air montant de façon centrale et pour recevoir le support (2).

2. Echangeur thermique suivant la revendication 1, caractérisé en ce que le diamètre des éléments thermiques circulaires (7) diminue du bas vers le haut.

3. Echangeur thermique suivant l'une des revendications 1 ou 2, caractérisé en ce que chacun des éléments thermiques (4; 7) est disposé à distance sur un élément de support (10) de telle manière à permettre entre celui-ci et l'élément d'échange thermique le passage d'un tuyau (12) de circulation d'air s'étendant de l'extérieur vers le centre.

4. Echangeur thermique suivant l'une des revendications 1 à 3, caractérisé en ce que chacun des éléments d'échange thermique (4; 7) consiste d'un corps profilé en forme de plaque comprenant une peau extérieure étanche contre le passage d'un flux et comprenant à l'intérieur des ouvertures pour le passage et la distribution d'un flux de support thermique, par exemple un liquide, et comportant au moins une entrée (16) et une sortie (17) pour le flux de support thermique.

## Claims

1. Heat exchanger for exploiting heat from the ambient air which is designed freely mountable and comprising a plurality of superposed spaced apart plate-like heat exchange elements (4; 7) arranged on a support (2) and provided with an inlet and an outlet duct for the circulation of a heat support medium, the surface of said elements being exposed to a flow of air, characterized in that heat exchange elements (4; 7) are designed conically in the form of a pyramid or in the form of a circular disk and comprising at their center an aperture (5) for the passage of centrally mounting air and for receiving support (2).

2. Heat exchanger as defined in claim 1, characterized in that the diameter of the individual circular heat exchange elements (7) decreases in upward direction.

3. Heat exchanger as defined in either of claims 1 or 2, characterized in that each heat exchange element (4; 7) is supported on a support body (10) in spaced apart relationship to the latter in a way to permit between the latter and the heat exchange element the provision of a channel (12) extending from the exterior to the center for the passage of air.

4. Heat exchanger as defined in either of claims 1 to 3, characterized in that each heat exchange element (4; 7) consists of a contoured plate-like body comprising a flow medium tight outer skin and provided at the inside with apertures for the passage and distribution of the heat support medium, e.g. a liquid, and being provided with at least one inlet (16) and at least one outlet (17) for the heat support medium.

FIG. 1

FIG. 2

FIG. 3

FIG. 4

FIG. 5